(19)

Europäisches
Patentamt
European
Patent Office
Office européen
des brevets

(11) **EP 1 984 617 B1**

(12) **EUROPEAN PATENT SPECIFICATION**

(45) Date of publication and mention
of the grant of the patent:
**08.09.2010 Bulletin 2010/36**

(51) Int Cl.:
*F02M 25/08* (2006.01)     *F16K 31/04* (2006.01)

(21) Application number: **07704341.2**

(22) Date of filing: **05.02.2007**

(86) International application number:
**PCT/EP2007/051056**

(87) International publication number:
**WO 2007/090802 (16.08.2007 Gazette 2007/33)**

(54) **LEAK DETECTION METHOD AND ASSOCIATED VALVE AND FUEL SYSTEM**

LECKERKENNNUNGSVERFAHREN SOWIE VENTIL UND BRENNSTOFFSYSTEM DAFÜR

PROCEDE DE DETECTION DE FUITES, VALVE ET SYSTEME A COMBUSTIBLE ASSOCIES

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **07.02.2006 EP 06101356
07.02.2006 US 765741 P
25.10.2006 US 854101 P**

(43) Date of publication of application:
**29.10.2008 Bulletin 2008/44**

(73) Proprietor: **Inergy Automotive Systems Research
(Société
Anonyme)
1120 Bruxelles (BE)**

(72) Inventors:
• **BEHAR, Ron
Williamsport, Pennsylvania 17701 (US)**
• **GRANT, Eric
Ypsilanti, Michigan 48197 (US)**
• **MCCLEARY, Ryan
White Lake, Michigan 48386 (US)**
• **HILL, David
Commerce Township, Michigan 48382 (US)**
• **GARABEDIAN, Scott
Warren, Michigan 48092 (US)**
• **MEHTA, Saurin
Powell, OH 43065 (US)**
• **SLUSSER, Kevin
Rochester, Michigan 48307 (US)**
• **DIRKSON, Dave
Windsor, Ontario N9A 4C2 (CA)**

(74) Representative: **Jacques, Philippe et al
Solvay S.A.
Département de la Propriété Industrielle
Rue de Ransbeek, 310
1120 Bruxelles (BE)**

(56) References cited:
EP-A- 1 757 793     WO-A-2006/072633
US-A- 3 460 522     US-A- 4 270 504
US-A- 5 116 257     US-A- 5 347 971
US-A- 5 637 788     US-A- 6 105 556
US-A1- 2001 004 844     US-A1- 2005 044 939
US-A1- 2005 211 228     US-B1- 6 276 343
US-B1- 6 314 797     US-B1- 6 823 850

**Description**

TECHNICAL FIELD

The present invention relates to a leak detection method and a leak detection system for a fuel system.

BACKGROUND

Increasing the safety of currently used fuel tanks, involves the prevention or minimization of fuel vapour leaks. Both the Environmental Protection Agency (EPA) and the California Air Resources Board (CARB), specify the requirement of On-Board Diagnostic II (OBD II) for the check for evaporative emission system for leaks. This requires detecting system leaks equivalent to an orifice larger than 0.5 mm (0.020 inch) in diameter for vehicles produced starting model year 2000.

A fuel tank generally contains fuel in gaseous and liquid form. In particular conditions, eg. raise of temperature, a dangerous build-up of pressure may occur inside the fuel tank. For that reason it is advantageous to vent the fuel tank, providing there is no emission of hydrocarbons to the atmosphere.

In order to prevent this emission, the fuel tank is generally vented using an evaporative emission control system comprising in general a vapour canister containing an adsorptive material (eg. charcoal), through which fuel vapours escaping from the fuel tank are directed.

Leaks in the fuel tank or at the interface between the fuel tank and components (eg. canister, valves,...) may exist and their presence must be checked.

PRIOR ART

Current technologies involving leak detection are separated into detection of very small, small and gross leaks. Small leak detection relates to the detection of a leak equivalent to an opening having a diameter smaller than 1 mm (0.040 inch), and gross leaks detection relates to the detection of a leak equivalent to an opening having a diameter greater or equal to 12 mm (0.5 inch) and corresponding to a fuel cap off condition , ie. the filler pipe is not closed on the fill side. The detection of very small leaks corresponds to the detection of a leak equivalent to an opening with a diameter of about 0.5 mm (0.020 inch).

Prior inventions for detecting leaks use concepts of pressure levels and/or vacuum levels in the fuel tank. Some of them also use purge concepts to do the measurements.

An example of very small leak detection method in an evaporative emission control system is revealed in US patent 5,637,788. As a first step of the detection method, a vapour flow rate in a fuel tank is measured while a differential pressure between the inside of the fuel tank and the atmosphere is zero. Because the differential pressure across the tank is zero, there is no flow through any leaks in the tank but there is only a flow rate indicative of a vapour generation rate. The next step of the method is to measure the flow rate at another differential pressure achieved by pulling the vacuum on the fuel tank. At the lower differential pressure, flow will develop through any leaks in the tank in addition to flow due to vapour generation. Both flow measurements are then substracted, the result being indicative of a leak flow, so that the vapour flow is cancelled out. Statistical processing or filtering can be used to account for fluctuations of the vapour flow during the measurements. The cost of the detection method is high since additional processing devices are to be implemented.

Additionally, known prior art methods for leak detection are generally carried out when the engine has been turned off. It is in particular the case with the method described in US patent 6,314,797.

US 6,276,343 discloses a leak detection method which utilizes a change in internal pressure in a predetermined fluid-flow passage, and a comparison with a pre-determined leak criterion. This method does not use a constant fuel flow, set at a testing value, throughout the whole leak detection test.

US 4,270,504 discloses a fuel vapour venting valve.

SUMMARY OF THE INVENTION

To avoid the drawbacks of prior art, the applicant's invention relates to a system using existing technology, i.e. current components of the fuel system with no need for any additional sensors, or devices. It does not require any additional devices, volumes, or changes to the normal day to day operation of the vehicles. With the help of an intelligent fuel system or IFS (i.e. a fuel system comprising a fuel system control unit (FSCU) and data network connection), the present invention allows a continuous and accurate detection of leaks (even small leaks) in a fuel system based on the measurement of pressure differentials, which does not burden neither the cost nor the efficiency of the result since the IFS uses only existing sensors to perform the leak detection.

DESCRIPTION OF THE INVENTION

To this effect the present invention relates to a method of detecting a leak in a fuel system comprising a fuel tank and an orifice with a controlled section between the tank and the atmosphere, according to which:

a) the controlled section is set to a value $A_1$ at a time $T_1$ and a pressure differential $\Delta p_1$ between the inside of said fuel tank and the atmosphere is measured at least after an interval of time $\Delta T$ from $T_1$, for a constant fuel flow $F$ out of said fuel tank;

b) the controlled section is set to a value $A_2$ at a time $T_2$ and a pressure differential $\Delta p_2$ between the inside of said fuel tank and the atmosphere is measured at least after the same interval of time $\Delta T$ from $T_2$, for the same constant fuel flow $F$;

c) a ratio of said pressure differentials $\Delta p_1$ and $\Delta p_2$ is computed and is compared to a reference pressure differential ratio $\Delta p_L$ obtained with the same fuel system but comprising a calibrated leak.

According to the invention, the fuel system comprises a fuel tank.

The fuel tank is a hollow body of varying shapes, which may be equipped with various internal or external accessories, and even accessories passing through the wall of the chamber.

The fuel tank according to the invention may be made of any composition or material compatible with the fuels and the habitual conditions of use. It may, for example, be made of a material the composition of which contains at least one metal or one plastic. The invention gives good results with fuel tanks made of polymeric material. The polymeric material is preferably selected from the group consisting of polyethylene, polyethylene terephthalate, polybutylene terephthalate, polyamide, polyoxymethylene, polypropylene, elastomers and mixtures of two or more thereof. Preferably, the polymeric material comprises high density polyethylene (HDPE). In a specific embodiment, the hollow element also comprises a layer of barrier material like EVOH (at least partially hydrolysed ethylene - vinyl acetate copolymers). Alternatively, the HDPE may be surface treated (by fluorination, sulphonation or the like) in order to reduce its permeability to fuel.

According to the invention the fuel system comprises also an orifice with a controlled section between the tank and the atmosphere, i.e. a section that can be modified and set to a specified value in a controlled way.

At stages a) and b) of the method according to the invention, the flow of fuel $F$ out of the tank is constant, i.e. it is controlled in such a way as to stay equal to a pre-set test value $F_{test}$.

The reference pressure differential ratio $\Delta p_L$ according to step c) of the method is obtained in the same manner as the ratio of pressure differentials $\Delta p_1$ and $\Delta p_2$ : it is computed as the ratio of two pressure differentials corresponding to the values $A_1$ and $A_2$ of the controlled section, to the same fuel flow $F_{test}$ and measured in the same manner as $\Delta p_1$ and $\Delta p_2$.

The reference pressure differential ratio $\Delta p_L$ is obtained with the same fuel system but comprising a calibrated leak. This calibrated leak is chosen so as to apply requirements of standardized leak tests (eg. in OBD II tests) : eg. an orifice diameter of 0.5 mm for small leaks may be chosen as a maximum leak section acceptable to pass the OBD II tests.

The fuel system of the invention preferably comprises an evaporative emission control system aimed at controlling the emission of fuel vapour generated in the fuel tank. The evaporative emission control system generally comprises a fuel vapour canister filled with adsorbent material (eg. charcoal) that captures hydrocarbons from the fuel vapour; a venting line equipped with one or several roll-over-valves (ROV) communicating the fuel tank with the fuel vapour canister; a purge line and a valve between the canister and the engine, and a vent port between the canister and the atmosphere.

According to a first embodiment, this evaporative emission control system comprises an electronically controlled electromechanical valve, of the type described in patent application PCT/EP2006/05008 published under WO 2006/072633, the content of which being included herein by reference.

In particular, the electromechanical valve comprises a stationary outer housing comprising at least three bores, and a translating inner section which translates along the primary axis of the outer housing and which comprises adequate bores defining with the bores of the housing at least three ports of the valve.

This electromechanical valve acts as a venting valve and is normally open so that the canister collects hydrocarbon vapour generated by the fuel in the tank. When used in the frame of the invention, it connects the tank and the canister either through a large venting orifice or through a small venting orifice.

The orifice of controlled section is preferably between the fuel tank and the canister, and the controlled section is controlled by the electromechanical valve.

The electromechanical valve may also act as a purge valve, normally closed, and is modulated to draw the vapour out of the canister for ingestion in an engine intake system, in general either when the engine turns at normal speed or when the engine turns at idle speed.

Generally, said evaporative emission control system also includes a vent port and a vent line connecting the canister to the atmosphere. It is namely so that when the fuel vapour/air mixture coming from the fuel tank passes through the canister, it is separated, i.e. only the fuel vapour is absorbed on the adsorbent material while the air is not. Since this air is clean, it can be sent back to the atmosphere, which is done through the vent port. The vent port also allows air to come into the fuel system.

According to another, preferred embodiment of the invention, the orifice of controlled section is in between the vent port of the canister and the atmosphere and even more preferably, the controlled section is part of a vent valve having 2 functions: allowing to vent the tank during normal service and during refuelling, and controlling the vent section to perform the OBD test.

According to a preferred embodiment of the invention, the fuel system comprises a fuel system control unit (FSCU) and the method of the invention is performed by the FSCU. This can also be controlled by the ECU if the vehicle is not equipped with a FSCU.

The FSCU can manage the operating conditions and functioning parameters of the fuel system. The FSCU generally

- has means for controlling functions of the fuel system,
- is connected with at least one fuel system component to send signals or receive signals from said at least one fuel system component,
- is connected with at least one sensor that sends signals to the FSCU and/or receives signals from an engine control unit (ECU),
- is adapted to electronically and bi-directionally communicate with the ECU.

The FSCU preferably is a standalone controller, different from the ECU and which has taken over the control of the fuel system from the ECU, ie. the ECU does not directly control the fuel system any longer. The FSCU communicates with the ECU also for indication of any fuel system failure to the ECU.

The FSCU preferably controls the operation of all components integrated in the fuel system during normal and transient operating conditions of the engine, receives data on the operating parameters and sends information to make the components function. In general this control was previously made by the ECU or by component-dedicated electronic controllers (for instance, dedicated controllers for fuel pump management). The burden of controlling the fuel system is preferably switched to the FSCU.

The FSCU may also control the vapour management in the fuel system.

The purging of the fuel vapour canister may be under the control of the FSCU. This control can be dealt with through the purge valve (eg. three-way switching valve embodied in a solenoid actuator) that allows communication between the canister and the engine air intake system. The actuator opens the purge valve under a predetermined operating condition of the engine to connect the canister and the air intake system, thereby generating a purge gas flow through the canister.

The FSCU advantageously also communicates with the ECU preferably via the vehicle CAN bus since this communication medium is less sensitive to electronic bugs. Through this multiplex bus, the ECU sends messages to the FSCU to enable the fuel pump, to control the output pressure of the fuel pump if a variable speed fuel pump is provided, to disable the fuel pump in the event of a vehicle accident, to control the purging of the vapour canister, to indicate the ambient temperature, to indicate the engine temperature and to request information from one or more sensors such as OBD sensors.

It is preferred that the FSCU is a low power microprocessor, eg. with a voltage of 5V or even 3.3V. This type of microprocessor may have advantageously the following allocations : a ROM of 128 kilobytes, a volatile memory of 4 kilobytes and a non-volatile memory of 2 kilobytes.

In particular the fuel system comprises other components like a fuel pump that controls said fuel flow, i.e. fuel is drawn from the fuel tank and is discharged from the fuel tank through an opening in the fuel tank wall.

The fuel pump is preferably controlled by the FSCU.

More preferably said fuel pump is controlled through a variable speed/variable pressure control program, as described in patent application EP 05107665, the content of which being included herein by reference.

The theory behind the present invention is the following. When fuel flows out of the fuel tank - corresponding to the consummation of the vehicle engine - the volume left empty by the fuel in the fuel tank is preferably replaced by an equivalent volume of fresh air coming from the evaporative emission control system, generally through the vent port. In order to avoid any deformation of the tank, the flow of air through an orifice depends generally on the orifice section according to the following relation:

$$\frac{dV}{dt} = A\sqrt{\frac{2\Delta p}{\rho}} \qquad\qquad (1)$$

where

> $dV/dt$ : air flow
> $A$ : orifice section
> $\Delta p$ : pressure differential between the inside of the tank and the atmosphere
> $\rho$ : air density

A change in the orifice section $A$ gives in turn a change in $\Delta p$, for a constant air density $\rho$. It is namely so that the application of relation (1) with two different testing conditions, ie. $(A_1, \Delta p_1)$ and $(A_2, \Delta p_2)$, under the condition of constant fuel flow (and air flow accordingly), leads to the following relation

$$\left(\frac{A_1}{A_2}\right)^2 = \frac{\Delta p_2}{\Delta p_1} \qquad\qquad (2)$$

Since ratios are used, any dependency to environmental changes is diminished.

The method according to the invention allows a continuous leak detection even for very small leaks. This means that during a driving cycle, a leak detection test can be launched at any time without the need to turn off the engine.

Preferably the method according to the invention is included in an OBD test.

In an embodiment of the invention, the pressure differentials $\Delta p_1$ and $\Delta p_2$ are measured only once after the interval of time $\Delta T$ from respectively $T_1$ and $T_2$.

In another embodiment of the invention,

> a) said pressure differential $\Delta p_1$ is measured after successive intervals of time $\Delta T$ starting from $T_1$ in such a manner as to obtain one sequence of N measurements where N is a constant;
> b) said pressure differentials $\Delta p_2$ is measured after successive intervals of time $\Delta T$ starting from $T_2$ in such a manner as to obtain one sequence of N measurements;
> c) a sequence of N ratios of said pressure differentials $\Delta p_1$ and $\Delta p_2$ is computed from sequences of measurements obtained at stages a) and b), a numerical filter is applied to this sequence of N ratios in such a manner as to obtain a sequence of N filtered ratios, and said sequence of filtered ratios is compared to a sequence of N reference pressure differential ratios $\Delta p_L$ obtained with the same fuel system but comprising a calibrated leak.

Another object of the invention is a fuel system equipped with leak detection means and comprising:

> a) a fuel tank;
> b) an orifice with a controlled section between the tank and the atmosphere;
> c) means for varying said controlled section between at least two values;
> d) means for measuring a pressure differential between the inside of the tank and the atmosphere at said at least two values of said controlled section;
> e) means for computing the ratio between the two pressure differentials measured at stage d) and for comparing said ratio with a reference pressure differential ratio obtained with the same fuel system but with a calibrated leak and the atmosphere.

According to a preferred embodiment, the means for varying the controlled section are included into a valve which is preferably located between a canister and the atmosphere and which is besides a vent valve as described above.

The present invention also concerns a vent valve as described above and allowing to vent the tank during normal service and during refuelling, and to control the vent section to perform the OBD test. More particularly, it concerns a vent valve comprising:

> - a housing having at least one inlet orifice and at least 2 outlet orifices establishing at least 2 flow paths with different flow rates for a gas through the valve: one having a first restricted section A1 (I) and one having a second restricted section A2 (II);

- a mobile part able to move inside said housing between 3 positions: one where it does not restrict the flow through the valve, one where it restricts it to flow path (I) and one where it restricts it to flow path (II).

Different solutions are available to obtain the different flow rates/paths. For instance, the housing could have 3 outlet orifices eventually of different sizes, the mobile part covering one, 2 or none of these orifices according to its position.

In a preferred embodiment, the mobile part comprises an orifice and has a geometry such that in one of its positions, the gas may flow around it and through the valve almost without flow rate restriction; and in the 2 other positions, the gas is forced through said orifice with an associated flow rate restriction of the gas though the valve. The flow rate variation between these 2 other positions is obtained though the 2 outlet orifices of the housing, one of which being closed by the mobile part in one of said positions and open in the other. Preferably, these orifices have different sizes: the smaller one being always open and the larger one being blocked by the mobile part in one of its positions.

This embodiment offers the advantage of a very small amount of travel (movement of the mobile part and hence, size of the housings and of the valve itself) while being able to accommodate very high flow rates.

The mobile part may be moved by any means. In a preferred embodiment, it is moved by a mere mechanical motor (like a stepper motor) and not by a solenoid for instance, which offers an advantage in terms of cost.

In a preferred embodiment, the valve comprises a housing in 2 parts in order to enable the mounting of the mobile part inside of it. Preferably, these 2 parts are:

- an outer part comprising at least 2 orifices: one inlet orifice through which a gas flow can enter the valve and one outlet orifice through which said gas flow can exist the valve, said outer housing defining an internal volume;
- an inner part disposed inside said internal volume, wherein the mobile part can slide and having at least 2 orifices establishing a communication between the inlet orifice and the outlet orifice of the outer housing.

In that embodiment, the inner part is the active one, the outer part providing a sealing surface for the inner part to seal on. The housing is preferably comprised of two pieces so that the mobile part can easily be installed. The outer housing can also be used as a housing for any type of filter media that is required, if necessary.

The 2 parts of the housing according to that embodiment may be assembled by any means, preferably in a way such that they can easily be (dis)assembled. Clips or snap fit connexions give good results.

In order to have a leak tight assembly, it is preferable to foresee seals in the valve of the invention, at least between the assembly of the two parts of the housing (the case being) and between the housing and the mobile part. In a preferred embodiment, the later is overmoulded on at least one seal. Preferably, it is overmoulded on 2 seals: one on its upper surface and one on its lower surface.

The valve of the invention may be made of any material(s). Preferably, at least the housing and the mobile part are made of plastic. Plastics are namely light weight and they are easy to put in shape (mold). Their use also facilitates the overmoulding of the above mentioned seals for instance. More particularly, the housing can be made of POM (poly-oxy-methylene); the puck can be made of PA (polyamide) and the seals can be made of rubber (NBR). The actuator rod & housing are preferably of stainless steel.

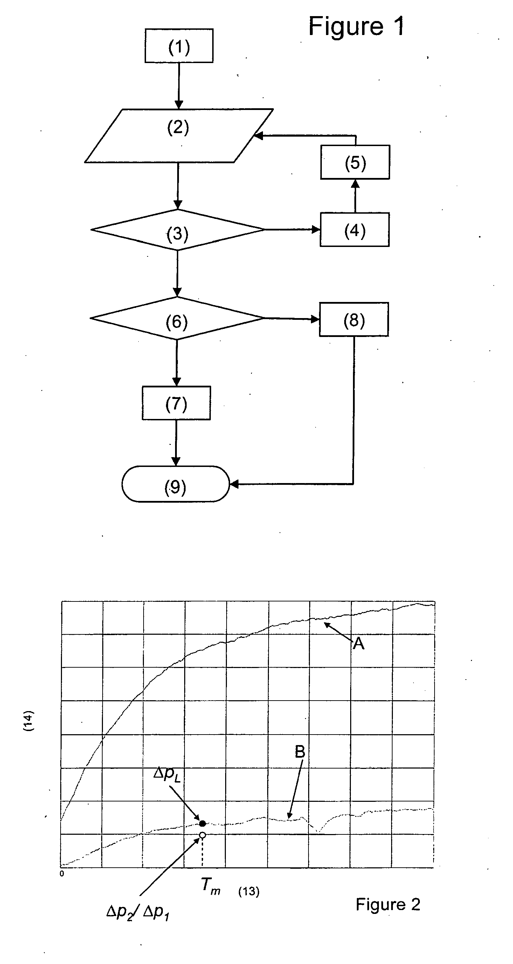

Figures 1 to 5 illustrate the present invention but are not to be construed as limiting its scope.

Figure 1 details a flow chart of a leak detection cycle according to an embodiment of the present invention.

The leak detection cycle is carried out for a fuel system comprising a fuel tank and an orifice with a controlled section $A$ between the tank and the atmosphere. The cycle is started with stage (1) where a flow $F$ of fuel out of the tank is set to a testing value $F_{test}$, and section A is set to a value $A_1$ at a time $T_1$.

During the whole leak detection cycle, the fuel flow is controlled by a fuel system control unit (FSCU).

At stage (2), a pressure differential $\Delta p_1$ between the inside of the fuel tank and the atmosphere is measured after an interval of time $\Delta T$ from $T_1$.

On the condition (verified at stage (3)) that the measurement at stage (2) corresponds to a first occurrence, said pressure differential $\Delta p_1$ is recorded at stage (4) and, at stage (5), the controlled section $A$ is set at a time $T_2$ to a value $A_2$ different from $A_1$. From stage (5) the leak cycle is processed back to stage (2) where a pressure differential $\Delta p_2$ is measured after the same interval of time $\Delta T$ but from $T_2$.

Then, since condition at stage (3) is not fulfilled any longer, stage (6) is carried out where a ratio $\Delta p_2/\Delta p_1$ is computed and is compared to a reference pressure differential ratio $\Delta p_L$ obtained with the same fuel system but comprising a calibrated leak.

If the ratio $\Delta p_2/\Delta p_1$ is greater than the reference ratio $\Delta p_L$ then stage (7) is processed where a no-leak detection information is communicated to the FSCU. If the ratio $\Delta p_2/\Delta p_1$ is smaller than or equal to the reference ratio $\Delta p_L$ then stage (8) is processed where a leak detection information is communicated to the FSCU.

The leak detection cycle is terminated at stage (9).

Figure 2 illustrates two reference curves A and B for the ratio $\Delta p_L$, respectively for a no-leak situation and a leak situation (corresponding to a calibrated leak section eg. an orifice diameter of 0.5 mm for small leak detection in OBD II tests). The axis (13) and (14) represent respectively the time and the ratio of pressure differentials. At time $T_m$, the reference ratio $\Delta p_L$ on curve B is compared to a measured ratio $\Delta p_2/\Delta p_1$. In this case, the reference ratio $\Delta p_L$ is bigger than the measured ratio $\Delta p_2/\Delta p_1$, i.e. there is a leak bigger than the calibrated leak in the fuel system.

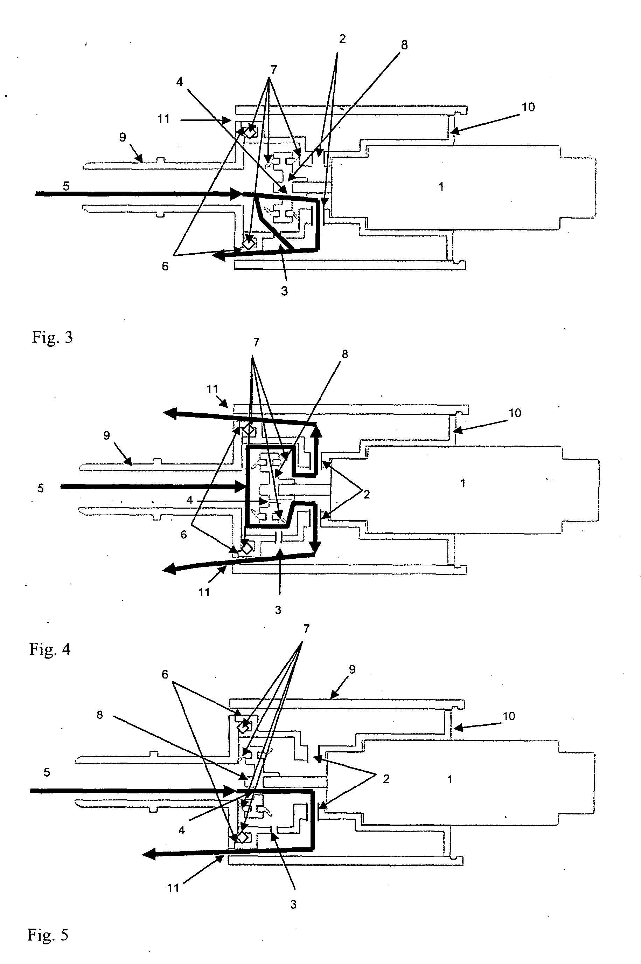

Figures 3 to 5 illustrate a preferred embodiment of a valve as described above allowing to vary in a controlled manner, the flow path between the fuel tank and the atmosphere.

This valve comprises:

- a stepper motor or solenoid (1) which moves a mobile part (8) which is in the form of a blocking plate of puck having a small orifice (4) of about 1 mm diameter;
- an outer housing (9) having an inlet port (5) connected to a canister (not shown) and at least 2 outlet orifices (11); it preferably includes multiple outlet orfices for a common flow path out of the valve with ample capacity for any position.
- an inner housing (10) open at its bottom defining hence an inlet port (orifice) and having several outlet orifices: at least 2 vent ports (2) of large size (about 8mm X 12mm in size; they just need ample area for proper flow at maximum condition) and at least one small size bleeding orifice (3) of about 1 mm diameter.

The inner housing (10) is provided with retention clips (6) enabling it to be clipped (snap fit) within the outer housing (9). It may have clips at the bottom or a clip at the top holding it together.

There are seals (7) in the valve which seal the puck (8) to the upper and lower housings (9, 10) and also seal the upper and lower housings (9, 10) together.

This valve has 3 positions, respectively shown in figures 3 to 5:

- In figure 3, the vent ports (2) are blocked by the puck (8) and its seals (7), but there are nevertheless 2 flow paths for the gas, indicated by the thick lines and arrows on the figure: one directly through restricted orifice (3) and one first through orifice (4) in the puck (8) and thereafter, through the vent ports (2). This position corresponds to the large orifice of the OBD test described in this application and hence, to the large leak path.
- In figure 4, the puck has moved from its upper seat, liberating the vent ports (2) and allowing gas to flow freely around it from the inlet port (5) of the valve to its outlet ports (11) though said vent ports (2) essentially (the bleeding orifices (3, 4) are free as well but flow there through is negligible). This is the natural, unpowered state of the valve. The actuator will be designed to rest in this position. If a solenoid actuator is used, it preferably has springs incorporated into it so this state is maintained while at rest. If a stepper motor is used, it will have to be a programmed position to return to. This is the state the valve will be in while not running a test i.e. during normal service (functioning) of the tank and while refuelling. This is also the default location of the inner part in the event of an actuator malfunction or failure.
- In figure 5, the puck (8) is sitting (sealed by means of its seals (7)) on the outer housing (9), closing off communication between said outer housing (9) and the inner one (10), except for a small leak flow path through orifice (4). The gas flow entering the valve through inlet port (5) will be forced through this orifice (4) and will reach the valve outlet (11) essentially through the vent ports (2). This position corresponds to the small orifice of the OBD test described in this application and hence, to the small leak path.

## Claims

1. A method of detecting a leak in a fuel system comprising a fuel tank and an orifice with a controlled section between the tank and the atmosphere, according to which:

   a) the controlled section is set to a value $A_1$ at a time $T_1$ and a pressure differential $\Delta p_1$ between the inside of said fuel tank and the atmosphere is measured at least after an interval of time $\Delta T$ from $T_1$, for a constant fuel flow out of said fuel tank set to a testing value;
   b) the controlled section is set to a value $A_2$ different from $A_1$ at a time $T_2$ and a pressure differential $\Delta p_2$ between the inside of said fuel tank and the atmosphere is measured at least after the same interval of time $\Delta T$ from $T_2$, for the same constant fuel flow;
   c) a ratio of said pressure differentials $\Delta p_1$ and $\Delta p_2$ is computed and is compared to a reference pressure differential ratio $\Delta p_L$ obtained with the same fuel system but comprising a calibrated leak;
   d) a leak bigger than said calibrated leak is detected if said ratio computed at stage c) is smaller than said reference ratio $\Delta p_L$.

**2.** Method according to claim 1, **characterized in that** the fuel system comprises an evaporative emission control system comprising a canister and an electronically controlled electromechanical valve, **in that** the orifice of controlled section is between the fuel tank and the canister, and **in that** said controlled section is controlled by the electromechanical valve.

**3.** Method according to claim 2, **characterized in that** said valve comprises a stationary outer housing (9, 10) comprising at least three bores, and a translating inner section (8) which translates along the primary axis of the outer housing and which comprises adequate bores defining with the bores of the housing at least three ports of the valve.

**4.** Method according to claim 1, wherein the orifice of controlled section is in between the vent port of a canister and the atmosphere and is controlled by a vent valve allowing to vent the tank during normal service and during refuelling.

**5.** Method according to anyone of the preceding claims, **characterized in that** the fuel system comprises a fuel system control unit (FSCU), and **in that** steps a) to d) are performed by the FSCU.

**6.** Method according to the preceding claim, **characterized in that** said fuel system comprises a fuel pump, and **in that** said fuel flow is controlled by said fuel pump which is controlled by said FSCU.

**7.** Method according to the preceding claim, **characterized in that** said fuel pump is controlled through a variable speed/variable pressure control program.

**8.** Method according to anyone of the preceding claims, **characterized in that** said pressure differentials $\Delta p_1$ and $\Delta p_2$ are measured only once after the interval of time $\Delta T$ from respectively $T_1$ and $T_2$.

**9.** Method according to anyone of the preceding claims, **characterized in that**

a) said pressure differential $\Delta p_1$ is measured after successive intervals of time $\Delta T$ starting from $T_1$ in such a manner as to obtain one sequence ofN measurements where N is a constant;
b) said pressure differentials $\Delta p_2$ is measured after successive intervals of time $\Delta T$ starting from $T_2$ in such a manner as to obtain one sequence of N measurements;
c) a sequence ofN ratios of said pressure differentials $\Delta p_1$ and $\Delta p_2$ is computed from sequences of measurements obtained at stages a) and b), a numerical filter is applied to this sequence of N ratios in such a manner as to obtain a sequence of N filtered ratios, and said sequence of filtered ratios is compared to a sequence ofN reference pressure differential ratios $\Delta p_L$ obtained with the same fuel system but comprising a calibrated leak.

**10.** Method according to anyone of the preceding claims, **characterized in that** said method is included in an on-board diagnostic (OBD) test.

**11.** Fuel system equipped with leak detection means and comprising:

a) a fuel tank;
b) an orifice with a controlled section between the tank and the atmosphere;
c) means for varying said controlled section between at least two different values;
d) means for setting the fuel flow out of the tank at a testing value and for maintaining it at a constant value during a given leak detection test;
e) means for measuring a pressure differential between the inside of the tank and the atmosphere at said at least two different values of said controlled section;
f) means for computing the ratio between the two pressure differentials measured at stage e) and for comparing said ratio with a reference pressure differential ratio obtained with the same fuel system but with a calibrated leak and the atmosphere.

**12.** Fuel system according to the preceding claim, wherein the means for varying the controlled section are included into a valve which is located between a canister and the atmosphere and which is a vent valve allowing to vent the tank during normal service and during refuelling.

**13.** Vent valve suitable for the method of claim 4 and for the fuel system of claim 12, said valve comprising:

- a housing (9, 10) having at least one inlet orifice (5) and at least 2 outlet orifices (2, 3) establishing at least 2 flow paths with different flow rates for a gas through the valve: one having a first restricted section A1 (I) and one having a second restricted section A2 (II), different from said first restricted section A1;
- a mobile part (8) able to move inside said housing between 3 positions: one where it does not restrict the flow through the valve, one where it restricts it to flow path (I) and one where it restricts it to flow path (II)

wherein:

- the mobile part (8) comprises an orifice(4) and has a geometry such that in one of its positions, the gas may flow around it and through the valve almost without flow rate restriction;
- the 2 outlet orifices (2,3) of the housing have different sizes, the smaller one (3) being always open and the larger one (2) being blocked by the mobile part in one of its positions.

**14.** Vent valve according to claim 13, wherein the mobile part (8) is moved by a stepper motor (1).

**15.** Vent valve according to any of claims 13 or 14, wherein the housing (9, 10) is in 2 parts:

- an outer part (9) comprising at least 2 orifices: one inlet orifice (5) through which a gas flow can enter the valve and one outlet orifice (11) through which said gas flow can exist the valve, said outer housing defining an internal volume;
- an inner part (10) disposed inside said internal volume, wherein the mobile part (8) can slide and having at least 2 orifices (2, 3) establishing a communication between the inlet orifice (5) and the outlet orifice (11) of the outer housing.

**Patentansprüche**

**1.** Verfahren zur Erkennung eines Lecks in einem Brennstoffsystem, das einen Brennstofftank und eine Öffnung mit einem gesteuerten Abschnitt zwischen dem Tank und der Atmosphäre umfasst, gemäß dem :

a) der gesteuerte Abschnitt zu einem Zeitpunkt $T_1$ auf einen Wert $A_1$ eingestellt wird und ein Druckdifferenzial $\Delta p_1$ zwischen der Innenseite des Brennstofftanks und der Atmosphäre mindestens nach einem Zeitintervall $\Delta T$ von $T_1$ für einen auf einen Prüfwert eingestellten konstanten Brennstofffluss aus dem Brennstofftank gemessen wird ;
b) der gesteuerte Abschnitt zu einem Zeitpunkt $T_2$ auf einen Wert $A_2$ eingestellt wird, der sich von $A_1$ unterscheidet, und ein Druckdifferenzial $\Delta p_2$ zwischen der Innenseite des Brennstofftanks und der Atmosphäre mindestens nach dem gleichen Zeitintervall $\Delta T$ von $T_2$ für den gleichen konstanten Brennstofffluss gemessen wird ;
c) ein Verhältnis der Druckdifferenziale $\Delta p_1$ und $\Delta p_2$ berechnet und mit einem Referenzdruckdifferenzialverhältnis $\Delta p_L$, verglichen wird, das mit dem gleichen Brennstoffsystem, das aber ein kalibriertes Leck umfasst, erhalten wird ;
d) ein Leck, das größer ist als das kalibrierte Leck, erkannt wird, wenn das in Schritt c) erhaltene Verhältnis kleiner ist als das Referenzverhältnis $\Delta p_L$.

**2.** Verfahren nach Anspruch 1, **dadurch gekennzeichnet, dass** das Brennstoffsystem eine Brennstoffverdunstungsanlage umfasst, die einen Behälter und ein elektronisch gesteuertes elektromechanisches Ventil umfasst, dass die Öffnung des gesteuerten Abschnitts zwischen dem Brennstofftank und dem Behälter liegt und dass der gesteuerte Abschnitt durch das elektromechanische Ventil gesteuert wird.

**3.** Verfahren nach Anspruch 2, **dadurch gekennzeichnet, dass** das Ventil ein stationäres äußeres Gehäuse (9, 10), das mindestens drei Bohrungen umfasst, und einen translatorisch verschiebbaren inneren Abschnitt (8) umfasst, der entlang der Primärachse des äußeren Gehäuses verschiebbar ist und angemessene Bohrungen umfasst, die mit den Bohrungen des Gehäuses mindestens drei Kanäle des Ventils definieren.

**4.** Verfahren nach Anspruch 1, wobei die Öffnung des gesteuerten Abschnitts zwischen dem Entlüftungskanal eines Behälters und der Atmosphäre liegt und durch ein Entlüftungsventil gesteuert wird, das die Entlüftung des Tanks bei Normalbetrieb und beim Auftanken gestattet.

**5.** Verfahren nach einem der vorhergehenden Ansprüche, **dadurch gekennzeichnet, dass** das Brennstoffsystem eine Brennstoffsystemsteuereinheit (FSCU - fuel system control unit) umfasst und dass die Schritte a) bis d) von der FSCU durchgeführt werden.

6. Verfahren nach dem vorhergehenden Anspruch, **dadurch gekennzeichnet, dass** das Brennstoffsystem eine Brennstoffpumpe umfasst und dass der Brennstofffluss durch die durch die FSCU gesteuerte Brennstoffpumpe gesteuert wird.

7. Verfahren nach dem vorhergehenden Anspruch, **dadurch gekennzeichnet, dass** die Brennstoffpumpe durch ein Steuerprogramm für variable Drehzahl/variablen Druck gesteuert wird.

8. Verfahren nach einem der vorhergehenden Ansprüche, **dadurch gekennzeichnet, dass** die Druckdifferenziale $\Delta p_1$ und $\Delta p_2$ nach dem Zeitintervall $\Delta T$ von $T_1$ bzw. $T_2$ nur einmal gemessen werden.

9. Verfahren nach einem der vorhergehenden Ansprüche, **dadurch gekennzeichnet, dass**

   a) das Druckdifferenzial $\Delta p_1$ nach aufeinander folgenden Zeitintervallen $\Delta T$, ausgehend von $T_1$, gemessen wird, so dass eine Folge von N Messungen erhalten wird, wobei N eine Konstante ist ;
   b) das Druckdifferenzial $\Delta p_2$ nach aufeinander folgenden Zeitintervallen $\Delta T$, ausgehend von $T_2$, gemessen wird, so dass eine Folge von N Messungen erhalten wird ;
   c) eine Folge von N Verhältnissen der Druckdifferenziale $\Delta p_1$ und $\Delta p_2$ aus in den Schritten a) und b) erhaltenen Messfolgen berechnet wird, ein numerischer Filter auf diese Folge von N-Verhältnissen angewandt wird, um eine Folge von N gefilterten Verhältnissen zu erhalten, und die Folge von gefilterten Verhältnissen mit einer Folge von N Referenzdruckdifferenzialverhältnissen $\Delta p_L$ verglichen wird, die mit dem gleichen Brennstoffsystem, das aber ein kalibriertes Leck umfasst, erhalten werden.

10. Verfahren nach einem der vorhergehenden Ansprüche, **dadurch gekennzeichnet, dass** das Verfahren in einem Onboard-Diagnose-Test (OBD-Test) enthalten ist.

11. Brennstoffsystem, das mit Leckerkennungsmitteln ausgestattet ist und Folgendes umfasst:

    a) einen Brennstoffsystemtank ;
    b) eine Öffnung mit einem gesteuerten Abschnitt zwischen dem Tank und der Atmosphäre ;
    c) Mittel zum Variieren des gesteuerten Abschnitts zwischen mindestens zwei verschiedenen Werten ;
    d) Mittel zum Einstellen des Brennstoffstroms aus dem Tank auf einen Prüfwert und zu seinem Halten auf einem konstanten Wert während eines gegebenen Leckerkennungstests ;
    e) Mittel zum Messen eines Druckdifferenzials zwischen der Innenseite des Tanks und der Atmosphäre bei den mindestens zwei verschiedenen Werten des gesteuerten Abschnitts ;
    f) Mittel zum Berechnen des Verhältnisses zwischen den beiden Druckdifferenzialen, die in Schritt e) gemessen werden, und zum Vergleichen des Verhältnisses mit einem Referenzdruckdifferenzialverhältnis, das mit dem gleichen Brennstoffsystem erhalten wird, das aber ein kalibriertes Leck umfasst, und der Atmosphäre.

12. Brennstoffsystem nach dem vorhergehenden Anspruch, wobei die Mittel zum Variieren des gesteuerten Abschnitts in einem Ventil enthalten sind, das zwischen einem Behälter und der Atmosphäre positioniert ist und bei dem es sich um ein Entlüftungsventil handelt, das die Entlüftung des Tanks bei Normalbetrieb und beim Auftanken gestattet.

13. Entlüftungsventil, das sich für das Verfahren nach Anspruch 4 und für das Brennstoffsystem nach Anspruch 12 eignet, wobei das Ventil Folgendes umfasst :

    - ein Gehäuse (9, 10) mit mindestens einer Einlassöffnung (5) und mindestens zwei Auslassöffnungen (2, 3), die mindestens zwei Strömungswege mit verschiedenen Durchflussraten für ein Gas durch das Ventil herstellen : einen mit einem ersten, verengtem Abschnitt A1(I) und einen mit einem zweiten, verengtem Abschnitt A2(II), der von dem ersten verengten Abschnitt A1 verschieden ist ;
    - ein bewegliches Teil (8), das sich in dem Gehäuse zwischen drei Positionen bewegen kann : einer, in der es die Strömung durch das Ventil nicht drosselt, einer, in der es den Strömungsweg (I) drosselt, und einer, in der es den Strömungsweg (II) drosselt,

    wobei :

- das bewegliche Teil (8) eine Öffnung (4) umfasst und eine solche Geometrie aufweist, dass in einer seiner Positionen das Gas fast ohne Durchflussbegrenzung dort herum und durch das Ventil strömen kann ;
- die beiden Auslassöffnungen (2, 3) des Gehäuses verschiedene Größen aufweisen, wobei die kleinere (3) immer geöffnet ist und die größere (2) durch das bewegliche Teil in einer seiner Positionen gesperrt ist.

**14.** Entlüftungsventil nach Anspruch 13, wobei das bewegliche Teil (8) durch einen Schrittmotor (1) bewegt wird.

**15.** Entlüftungsventil nach Anspruch 13 oder 14, wobei das Gehäuse (9, 10) aus zwei Teilen besteht:

- einem äußeren Teil (9), das mindestens zwei Öffnungen umfasst : eine Einlassöffnung (5), durch die ein Gasstrom in das Ventil eintreten kann, und eine Auslassöffnung (11), durch die der Gasstrom das Ventil verlassen kann, wobei das äußere Gehäuse ein Innenvolumen definiert ;
- einem inneren Teil (10), das in dem Innenvolumen angeordnet ist, wobei das bewegliche Teil (8) gleiten kann und mindestens zwei Öffnungen (2, 3) aufweist, die eine Verbindung zwischen der Einlassöffnung (5) und der Auslassöffnung (11) des äußeren Gehäuses herstellen.

## Revendications

**1.** Procédé de détection d'une fuite dans un système à combustible comprenant un réservoir de combustible et un orifice présentant une section contrôlée entre le réservoir et l'atmosphère, selon lequel :

a) la section contrôlée est réglée à une valeur $A_1$ à un temps $T_1$, et une pression différentielle $\Delta p_1$ entre l'intérieur dudit réservoir de combustible et l'atmosphère est mesurée au moins après un intervalle de temps $\Delta T$ à partir de $T_1$, pour un écoulement de combustible constant hors dudit réservoir de combustible réglé à une valeur de test ;
b) la section contrôlée est réglée à une valeur $A_2$ différente de $A_1$ à un temps $T_2$, et une pression différentielle $\Delta p_2$ entre l'intérieur dudit réservoir de combustible et l'atmosphère est mesurée au moins après un intervalle de temps $\Delta T$ à partir de $T_2$, pour le même écoulement de combustible constant ;
c) un rapport desdites pressions différentielles $\Delta p_1$ et $\Delta p_2$ est calculé et est comparé à un rapport de pression différentielle de référence $\Delta p_L$ qui est obtenu avec le même système à combustible mais qui présente une fuite calibrée ; et
d) une fuite plus importante que ladite fuite calibrée est détectée si ledit rapport qui est calculé à l'étape c) est inférieur audit rapport de référence $\Delta p_L$.

**2.** Procédé selon la revendication 1, **caractérisé en ce que** le système à combustible comprend un système de commande d'émission par évaporation comprenant un absorbeur et une valve électromécanique à commande électronique, **en ce que** l'orifice de la section contrôlée est formé entre le réservoir de combustible et l'absorbeur, et **en ce que** ladite section contrôlée est contrôlée par la valve électromécanique.

**3.** Procédé selon la revendication 2, **caractérisé en ce que** ladite valve comprend un boîtier extérieur stationnaire (9, 10) comprenant au moins trois alésages, et une section intérieure mobile (8) qui se déplace le long de l'axe primaire du boîtier extérieur et qui comprend des alésages adéquats qui définissent au moins trois ports de la valve avec les alésages du boîtier.

**4.** Procédé selon la revendication 1, dans lequel l'orifice de la section contrôlée est formé entre le port de décharge d'un absorbeur et l'atmosphère, et est commandé par une valve de décharge qui permet de décharger le réservoir pendant le service normal et pendant un ravitaillement.

**5.** Procédé selon l'une quelconque des revendications précédentes, **caractérisé en ce que** le système à combustible comprend une unité de commande de système à combustible (FSCU), et **en ce que** des étapes a) à d) sont exécutées par la FSCU.

**6.** Procédé selon l'une quelconque des revendications précédentes, **caractérisé en ce que** ledit système à combustible comprend une pompe à combustible, et **en ce que** ledit écoulement de combustible est commandé par ladite pompe à combustible qui est contrôlée par la FSCU.

**7.** Procédé selon l'une quelconque des revendications précédentes, **caractérisée en ce que** ladite pompe à combustible est contrôlée par l'intermédiaire d'un programme de commande à vitesse variable/pression variable.

**8.** Procédé selon l'une quelconque des revendications précédentes, **caractérisé en ce que** lesdites pressions différentielles $\Delta p_1$ et $\Delta p_2$ sont mesurées uniquement après l'intervalle de temps $\Delta T$ à partir de $T_1$ et $T_2$, respectivement.

**9.** Procédé selon l'une quelconque des revendications précédentes, **caractérisé en ce que** :

a) ladite pression différentielle $\Delta p_1$ est mesurée après des intervalles de temps successifs $\Delta T$ à partir de $T_1$ de manière à obtenir une séquence de N mesures, où N est une constante ;
b) ladite pression différentielle $\Delta p_2$ est mesurée après des intervalles de temps successifs $\Delta T$ à partir de $T_2$ de manière à obtenir une séquence de N mesures ; et
c) une séquence de N rapports desdites pressions différentielles $\Delta p_1$ et $\Delta p_2$ est calculée à partir de séquences de mesure qui sont obtenues aux étapes a) et b), un filtre numérique est appliqué à cette séquence de N rapports de manière à obtenir une séquence de N rapports filtrés, et ladite séquence de rapports filtrés est comparée à une séquence de N rapports de pression différentielle de référence $\Delta p_L$ qui est obtenue avec le même système à combustible mais qui présente une fuite calibrée.

**10.** Procédé selon l'une quelconque des revendications précédentes, **caractérisé en ce que** ledit procédé est inclus dans un test de diagnostic embarqué (OBD).

**11.** Système à combustible équipé de moyens de détection de fuite et comprenant :

a) un réservoir de combustible ;
b) un orifice qui présente une section contrôlée entre le réservoir et l'atmosphère ;
c) des moyens pour faire varier la section contrôlée entre au moins deux valeurs différentes ;
d) des moyens pour régler l'écoulement de combustible hors du réservoir à une valeur de test et pour maintenir celui-ci à une valeur constante pendant un test de détection de fuite donné ;
e) des moyens pour mesurer une pression différentielle entre l'intérieur du réservoir et l'atmosphère auxdites au moins deux valeurs différentes de ladite section contrôlée ; et
f) des moyens pour calculer le rapport entre les deux pression différentielles mesurées à l'étape e) et pour comparer ledit rapport avec un rapport de pression différentielle de référence qui est obtenu avec le même système à combustible mais avec une fluide calibrée et l'atmosphère.

**12.** Système à combustible selon la revendication précédente, dans lequel les moyens pour faire varier la section contrôlée sont incorporés dans une valve qui est située entre un absorbeur et l'atmosphère et qui est une valve de décharge qui permet de décharger le réservoir pendant un service normal et pendant un ravitaillement.

**13.** Valve de décharge appropriée pour le procédé selon la revendication 4 et pour le système à combustible selon la revendication 12, ladite valve comprenant :

- un boîtier (9, 10) qui comporte au moins un orifice d'entrée (5) et au moins deux orifices de sortie (2, 3) qui établissent au moins deux chemins d'écoulement qui présentent des débits différents pour un gaz à travers la valve ; un chemin qui présente une première section limitée A1 (I), et un chemin qui présente une deuxième section limitée A2 (II), qui est différente de ladite première section limitée A1 ; et
- une partie mobile (8) qui est capable de se déplacer à l'intérieur dudit boîtier entre trois positions : une position dans laquelle elle ne limite pas l'écoulement à travers la valve ; une position dans laquelle elle limite l'écoulement vers le chemin d'écoulement (I), et une position dans laquelle elle limite l'écoulement vers le chemin d'écoulement (II) ;

dans laquelle :

- la partie mobile (8) comporte un orifice (4) et présente une géométrie telle que dans l'une de ses positions, le gaz puisse s'écouler autour de celle-ci et à travers la valve presque sans limitation de débit ; et
- les deux orifices de sortie (2, 3) du boîtier présentent des tailles différentes, le plus petit orifice (3) étant toujours ouvert, et le plus grand orifice (2) étant bloqué par la partie mobile dans l'une de ses positions.

**14.** Valve de décharge selon la revendication 13, dans laquelle la partie mobile (8) est mise en mouvement par un moteur pas à pas (1).

**15.** Valve de décharge selon l'une quelconque des revendications 13 ou 14, dans laquelle le boîtier (9, 10) se compose de deux parties :

- une partie extérieure (9) qui comporte au moins deux orifices : un orifice d'entrée (5) à travers lequel un écoulement de gaz pénètre dans la valve, et un orifice de sortie (11) à travers lequel ledit écoulement de gaz peut sortir de la valve, ledit boîtier extérieur définissant un volume interne ; et
- une partie intérieure (10) qui est disposée à l'intérieur dudit volume interne, dans laquelle la partie mobile (8) peut coulisser, et qui comporte au moins deux orifices (2, 3), établissant ainsi une communication entre l'orifice d'entrée (5) et l'orifice de sortie (11) du boîtier extérieur.

# Figure 1

Figure 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5637788 A
- US 6314797 B
- US 6276343 B
- US 4270504 A
- EP 200605008 W
- WO 2006072633 A
- EP 05107665 A